# EUROPEAN PATENT APPLICATION

(11) **EP 4 458 445 A1**
(43) Date of publication of application: **06.11.2024**
(21) Application number: 22916881.0
(22) Date of filing: 28.12.2022
(51) Int. Cl.: B01D 21/00, B01D 29/86

(54) **TANK FOR FILTERING AND COLLECTING DEBRIS**

(30) Priority: 29.12.2021 RU 2021139683
(71) Applicant: Joint Stock Company "Atomenergoproekt", Moscow, 107996 (RU); Science and Innovations - Nuclear Industry Scientific Development, Private Enterprise, Moscow 119017 (RU)
(72) Inventor: MATYUSHEV, Leonid Aleksandrovich, Saint Petersburg, 196657 (RU); MITRYUKHIN, Andrey Gennadievich, Saint Petersburg, 197343 (RU); SHAMRAY, Yevgeniya Leonidovna, Saint Petersburg, 196626 (RU); KOROBEINIKOV, Kirill Yuryevich, Saint Petersburg, 197350 (RU)
(74) Representative: Osmans, Voldemars
(86) International application number: PCT/RU2022/000402
(87) International publication number: WO 2023/128811

(57) **Abstract**

A tank for garbage filtration and collection relates to devices for the filtration of a large liquid flow containing a large volume of garbage; it can be used, in particular, in nuclear power industry, specifically in pit tanks of nuclear power plants (NPP), intended for the filtration of large volumes of coolant in case of an accident. The tank for garbage filtration and collection comprises an inlet made in a tank cover, and an outlet, on which a filtering device is installed, a vertical shaft is installed in the inlet, installed on the bottom of the tank, a window is made in the lower part of the vertical shaft for liquid removal, directed to a side opposite to the filtering device, and the upper part of the vertical shaft is made in the form of a funnel. The tank for garbage filtration and collection can be used to filter a large fluid flow containing a large volume of garbages, particularly in nuclear power plant safety systems.

## Description

### TECHNICAL FIELD

The invention relates to devices for the filtration of a large liquid flow containing a large volume of garbage; it can be used, in particular, in nuclear power industry, specifically in pit tanks of nuclear power plants (NPP), intended for the filtration of large volumes of coolant in case of an accident.

### BACKGROUND ART

An important problem in NPP operation is filtration of coolant (usually water) flowing out of damaged pipelines of the primary circuit in case of an accident. Since the use of coolant for core cooling after an accident is no less important than in normal operation, and the lack of heat carrier can lead to a severe core meltdown accident, coolant flowing from damaged pipelines must be collected and directed to the emergency core cooling system (ECCS) for further core cooling. At the same time, the problem is that in accidents associated with the primary coolant blowdown, a significant amount of garbage (debris) from the destruction of structures and facilities is formed in the containment. The resulting debris is mixed with a boric acid solution used by the ECCS for long-term cooling of the reactor unit. Debris constituents can lead to blockage of the ECCS and reduce the efficiency of reactor unit cooling. Debris consists of the following main parts:
- latent debris, which is dust, dirt, clothing fibers, pieces of paper, plastic, rust, dried drops of paint, etc. Thus, latent debris is the debris generated in the process of basic construction and repair works under the containment, as well as in the process of NPP operation;
- debris from the destruction of thermal insulation structures;
- debris from the destruction of paint coatings;
- chemical debris.

Coolant comprising a large amount of debris is collected in special pit tanks, in which filtering devices are installed to clean coolant before its supply to the ECCS. The problem is that a large volume of coolant comprising a large volume of debris can create obstacles at the inlet of the filtering devices and significantly reduce or completely stop the access of coolant into them, which can lead to a lack of coolant in the reactor core, its heating up and a severe accident. Thus, a tank for garbage filtration and collection should be designed to prevent garbage (debris) from clogging the filtering devices during high fluid flow carrying a large flow of garbage.

Various technical solutions have been applied to solve such a problem.

A VVER emergency cooling system pit protection device with a filter module is known (patent of the Russian Federation for invention No. 2686684, publ. on 30.04.2019, IPC G21C 9/00), containing a system of filters installed on the receiving opening of the upper part of the pit placed in the bottom of the reactor containment, connected to the intake opening of the emergency cooling system pipelines, and representing filter modules connected to the collectors, preventing the entry of debris into the intake opening of the emergency cooling system pipelines, wherein each filter module has side and upper slotted grids and filtering elements located inside, made in the form of filtering elements of the emergency cooling system.

This solution ensures the uniform flow over the filtering surface and eliminating the unevenness of its being covered with debris, as well as ensuring the uniformity of the flow along the surface of the filtering element itself. The disadvantage of such a solution is the impossibility to ensure the safety of the filtering devices at large flows of liquid carrying a large volume of garbage that can clog the holes of the filtering element.

The closest analog to the claimed invention is the suspended particle catcher (inventor's certificate SU 1733045, publ. on 15.05.1992, IPC: B01D 24/02) including a pit tank with an opening for the inlet of contaminated water and the outlet of purified water, a two-stage filter including a first stage of coarse purification and a second stage made of meshes with cells sequentially decreasing in the direction of the outlet of purified water, and pleated meshes installed between meshes with cells of the second stage of purification, in which in order to increase the efficiency of water purification and reliability of the catcher, the first stage of purification is made of parallel-connected flat mesh elements, in each of which vertical meshes with cells equal to the cells of the meshes of the first rows of the second stage of purification are installed symmetrically to the axis of the element, and the cells of the last mesh of the first stage have larger cells than the last mesh in the second stage of purification, the catcher is equipped with a vertical shaft installed at the bottom of the pit tank coaxially with the opening for water supply and having a cross-section exceeding the cross-section of the opening for water supply, with windows in the wall of the shaft at the overlap of the pit tank, and the lower part of the shaft is communicated with each mesh element of the first stage of purification.

This solution increases the efficiency of the catcher and the reliability of its operation. Its disadvantage, however, is the inability to ensure the safety of the filtering devices at high flows of liquid carrying a large volume of garbage.

### SUMMARY OF INVENTION

The objective of the claimed invention is to develop a tank for garbage filtration and collection providing reliable operation under high fluid flows carrying a large volume of garbage.

The technical result of the claimed invention is to increase the safety of operation of the tank for garbage filtration and collection in case of large liquid flows carrying a large volume of garbage.

The technical result is achieved by the fact that in the known tank for garbage filtration and collection, comprising an inlet made in a tank cover, and an outlet, on which a filtering device is installed, a vertical shaft is installed in the inlet, installed on the bottom of the tank, a window is made in the vertical shaft for liquid removal, the window is made in the lower part of the vertical shaft and directed to a side opposite to the filtering device.

Preferably, the upper part of the vertical shaft is made in the form of a funnel.

It is recommended to provide the walls of the vertical shaft with vertical ribs.

It is advisable to provide the funnel walls with horizontal ribs.

It is rational to install a guard on top of the funnel.

### BRIEF DESCRIPTION OF DRAWINGS

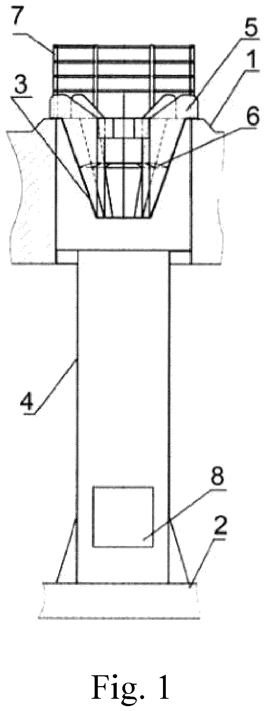

Fig. 1 shows a sectional view of a tank for garbage filtration and collection with a vertical shaft installed therein, in a preferred embodiment.

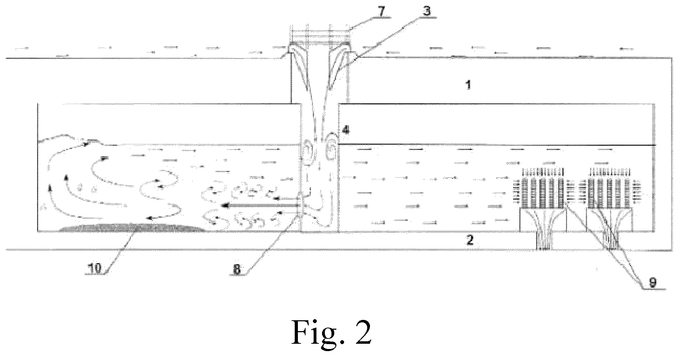

Fig. 2 is a side cross-sectional view of a tank for garbage filtration and collection in a preferred embodiment.

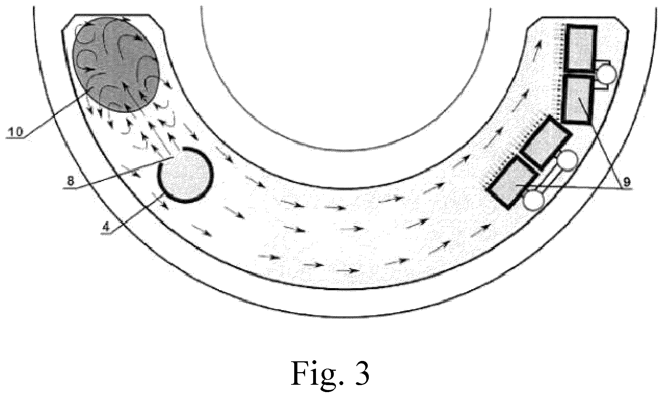

Fig. 3 is a top sectional view of a tank for garbage filtration and collection in a preferred embodiment.

### DESCRIPTION OF EMBODIMENTS

A vertical shaft 4 is mounted in the inlet made in the ceiling 1 of the tank, the lower part of the vertical shaft 4 is mounted on the bottom 2 of the tank. The upper part of the vertical shaft 4 in the preferred embodiment is provided with a funnel 3, in which vertical 5 and horizontal 6 ribs are made. A window 8 is made in the lower part of the vertical shaft 4, directed to a side opposite to the filtering device 9. Garbage contained in the flow, mainly garbage is collected in the garbage deposition zone 10. The funnel 3 in the preferred embodiment is provided with a guard 7.

The tank for garbage filtration and collection in the preferred embodiment operates as follows. When a large flow of liquid containing a large amount of garbage enters from the ceiling 1 of the tank through the funnel 3 into the vertical shaft 4, a liquid flow is formed, which at the same time loses part of its kinetic energy due to braking on the vertical 5 and horizontal 6 ribs made in the funnel 3 and vertical shaft 4. In this case, the guard 7 prevents particularly large pieces of garbage from entering the tank. Then the liquid flow, falling from a height, hits the bottom of the vertical shaft 4 and due to this loses an additional part of the kinetic energy, after which, getting through the window 8 into the main space of the tank, it is directed in the direction opposite to the filtering elements 9, due to which the flow loses an additional part of the kinetic energy on the way to the filtering elements 9, which leads to the deposition of garbage in the garbage deposition zone 10, as far as possible from the filter elements 9, thereby preventing their clogging. This allows them to operate without hindrance, which increases safety.

The tank for garbage filtration and collection can be used to filter a large fluid flow containing a large volume of garbage, particularly in nuclear power plant safety systems.

## Claims

1. A tank for garbage filtration and collection, comprising an inlet made in a tank cover, and an outlet, on which a filtering device is installed, a vertical shaft is installed in the inlet, installed on the bottom of the tank, a window is made in the vertical shaft for liquid removal, **characterized in that** the window is made in the lower part of the vertical shaft and directed to a side opposite to the filtering device.

2. The tank according to claim 1, **characterized in that** the upper part of the vertical shaft is made in the form of a funnel.

3. The tank according to claim 1, **characterized in that** the walls of the vertical shaft are provided with vertical ribs.

4. The tank according to claim 2, **characterized in that** the funnel walls are provided with horizontal ribs.

5. The tank according to claim 2, **characterized in that** guard is installed on top of the funnel.
